# EUROPEAN PATENT APPLICATION

(11) **EP 2 139 149 A1**
(43) Date of publication of application: **30.12.2009**
(21) Application number: 08305324.9
(22) Date of filing: 25.06.2008
(51) Int. Cl.: H04L 1/16, H04L 1/18

(54) **Method and apparatus of communication using group acknowledgement protocol**

(71) Applicant: Thomson Licensing, Inc., 92100 Boulogne-Billancourt (FR)
(72) Inventor: Wang, Xianlei Rm03-09,8F,Building A, Techn. Fortune Center, 100085, BEIJING (CN); Zhang, Zhigang Rm03-09,8F,Building A, Techn. Fortune Center, 100085, Beijing (CN); Cheng, Linxiang Rm03-09,8F,Building A, Techn. Fortune Center, 100085, BEIJING (CN)
(74) Representative: Ruellan-Lemonnier, Brigitte

(57) **Abstract**

A method and apparatus of communication using a group acknowledgment protocol are provided. The method of communication between a transmitter and a receiver comprises the steps of: transmitting from the transmitter a group of frames constituting an ordered sequence to the receiver; receiving at the receiver in accordance with the sequence at least one frame from the transmitted group; upon detection by the receiver that a frame is received out of the sequence at the receiver, transmitting from the receiver an acknowledgement frame requesting retransmission of all frames of the group starting with the first frame in accordance with the sequence that is not received at the receiver; and upon reception by the transmitter the acknowledgement frame, retransmitting frames requested by the acknowledgement frame to the receiver. Embodiments of the present invention can decrease the requirement on the memory capacity, reduce frame loss rate and improve throughput of the network system (Fig. 4)

## Description

### FIELD OF THE INVENTION

The present invention relates generally to the field of communication, and more particularly, to a method and apparatus of communication using a group acknowledgment protocol.

### BACKGROUND OF THE INVENTION

Communication systems are known to support wireless or wired communication. An acknowledgement (ACK) and retransmission protocol is used in communication systems to reduce package loss rate. In the protocol, a transmitter of the communication system transmits a data frame to a receiver, requiring the receiver to transmit an ACK frame when it has properly received the data frame so as to signal the transmitter that the data frame is received. Through the ACK mechanism, the receiver can detect a frame loss and signal the transmitter that the transmitted data frame is missing in order to trigger a retransmission of this data frame.

Several ACK protocols had already been proposed. A one -to-one ACK and a Block ACK protocols are known in the art.

In the one-to-one ACK protocol, each transmitted frame requires an ACK frame from the receiver of the communication system. The one-to-one ACK protocol is usually used for wireless network systems to reduce package loss rate because the wireless medium isn't as reliable as a wired one. However, using the one-to-one ACK protocol, a transmitter will have to stop transmitting until it receives the ACK frame for the most recent transmitted frame from the receiver, so that the throughput of communication system will decrease.

In order to improve channel efficiency, the Block ACK protocol was proposed in IEEE802.11e. According to the Block ACK protocol, a block of frames destined to a same receiver is sent without individual acknowledgment of each frame. After the transmission of the entire block, the transmitter initiates a Block ACK Request (BAR) frame to enquire the number of frames that have been received successfully. Then the receiver responds with a Block ACK (BA) frame. This protocol can reduce the traffic in comparison to sending immediate ACK frames one by one for each received frame. However, with the Block ACK protocol, because the receiver can't send any ACK frame s during time-slots of the transmitter in order to avoid collision, the transmitter will have to buffer all frames transmitted in its time-slot period in a memory for possible retransmissions. At the same time, the receiver may also need to buffer all frames received for possible reordering of the frames in a memory.

### SUMMARY OF THE INVENTION

An object of the invention is to provide a method and a system for communication between a transmitter and a receiver with a group acknowledgment protocol to decrease the requirement on the memory capacity, reduce frame loss rate and improve throughput of the system.

Another object of the present invention is to provide a transmitter that can transmit data frames to a receiver with a group acknowledgment protocol to implement an efficient and cost-effective transmission.

Yet, another object of the present invention is to provide a receiver that can receive data frames from a transmitter with a group acknowledgment protocol to implement an efficient and cost-effective transmission.

According to one aspect of the invention, a method of communication between a transmitter and a receiver is provided. The method comprises the steps of, at the level of the transmitter: transmitting a group of frames constituting an ordered sequence to the receiver; and upon reception of an acknowledgement frame transmitted from the receiver, said acknowledgment frame requesting retransmission of all frames of the group starting with the first frame in accordance with the sequence that was not received, retransmitting all frames of the group starting with said first frame to the receiver.

According to another aspect of the invention, a method of communication between a transmitter and a receiver is provided. The method comprises the steps of, at the level of the receiver: receiving at least one frame of a group of frames constituting an ordered sequence transmitted from the transmitter; and upon detection that a frame is received out of the sequence, transmitting an acknowledgement frame to the transmitter requesting retransmission of all frames of the group starting with the first frame in accordance with the sequence that was not received.

According to another aspect of the invention, a transmitter of communication system is provided. The transmitter comprises: a group frame unit, for generating a group frame that is comprised of a plurality of frames to be transmitted to a receiver and setting up an ordered sequence for the frames in the group; an output unit coupled to the group frame unit, for transmitting the frames in the group in accordance with the sequence to the receiver; and an input unit, for receiving a frame from the receiver, wherein upon reception by the input unit of an acknowledgement frame transmitted from the receiver requesting retransmission of all frames of the group starting with the first frame that is not received in accordance with the sequence at the receiver, the output unit retransmits these frames indicated in the acknowledgement frame to the receiver.

According to another aspect of the invention, a receiver of communication system is provided. The receiver comprises: an input unit, for receiving at least one frame in a group of frames constituting an ordered sequence from a transmitter; a sequence detecting unit coupled to the receiving unit, for detecting whether a frame in the group is received out of sequence; an acknowledgment frame generating unit for generating an acknowledgement frame requesting retransmission of all frames in the group starting with the first frame not received in sequence; and an output unit for transmitting the acknowledgement frame to the transmitter.

### BRIEF DESCRIPTION OF DRAWINGS

These and other aspects, features and advantages of the present invention will become apparent from the following description in connection with the accompanying drawings in which:
Figure 1 is an exemplary diagram showing the network topology of an ADoC system;
Figure 2 is an exemplary diagram showing the Block ACK protocol used in the ADoC system;
Figure 3 is an exemplary diagram showing a group ACK protocol according to an embodiment of the present invention;
Figure 4 is an exemplary diagram showing the workflow of an example of the method of communication according to an embodiment of the present invention;
Figure 5 is a block diagram showing the structure of an ADoC transmitter according to an embodiment of the present invention;
Figure 6 is a flow chart showing the procedure of an ADoC transmitter generating a group frame to be transmitted;
Figure 7 is an exemplary diagram showing the structure of a generic data frame defined in 802.11;
Figure 8 is an exemplary diagram showing the structure of a part of the redefined data frame carrying group ACK information according to an embodiment of the present invention;
Figure 9 is a flow chart showing the transmitter setting subfields of a data frame in group ACK mechanism;
Figure 10 is a flow chart showing the transmitter buffering transmitted frames and retransmitting lost frames;
Figure 11 is a block diagram showing the structure of an ADoC receiver according to an embodiment of the present invention;
Figure 12 is a flow chart showing the receiver processing the group ACK information;
Figure 13 is an exemplary diagram showing the structure of a part of an ACK frame transmitted by the receiver; and
Figure 14 is a flow chart showing the receiver setting subfields of an ACK frame.

### DETAIL DESCRIPTION OF PREFERRED EMBODIMENTS

In the following description, various aspects of an embodiment of the present invention will be described. For purposes of explanation, specific configurations and details are set forth in order to provide a thorough understanding. However, it will also be apparent to one skilled in the art that the present invention may be practiced without the specific details present herein.

### 1. Application scenario

To provide a cost-effective bi-directional data transmission solution over the existing coaxial cable access network, a method has been proposed, which utilizes mature commodity WiFi chipsets with external frequency conversion circuit for frames delivery. The system which employs this method is referred to as ADoC (Asymmetric Data over Coaxial Cable) system, in which a TDF (Time Division Function) protocol is deployed to allow ADoC AP (Access Point) and STAs (stations) to access the coaxial cable medium in a time-sharing mode, instead of a contention-based mode. In this way, the user at home can access the remote IP core network via the cable access network.

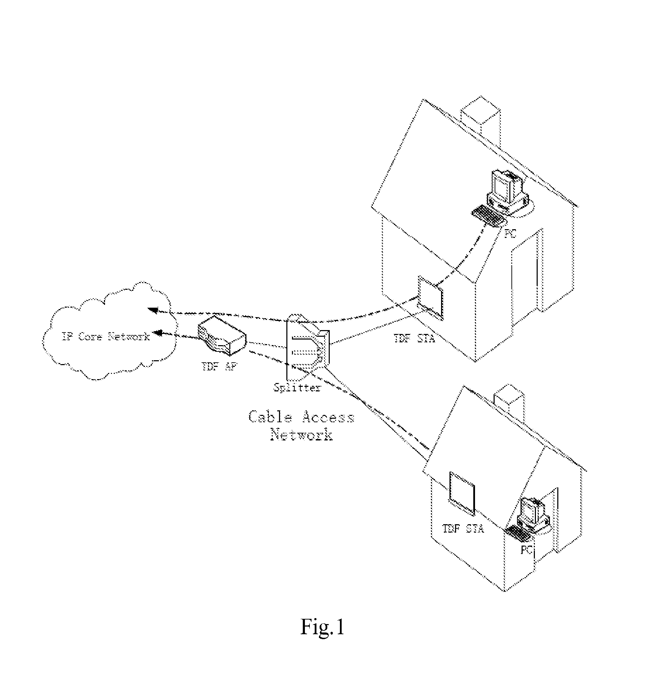

The detailed network topology is illustrated in Figure 1. As shown in Figure 1, in this typical access network infrastructure, a TDF protocol compliant AP has one Ethernet Interface (not shown) in connection with the IP core network, and one coaxial cable interface (not shown) in connection with the cable access network. On the other end of the cable access network, there are TDF protocol compliant STAs, i.e. terminals, which connect with the cable access network via the coaxial cable interface and connect with the home LAN (Local Area Network) via the Ethernet interface. In the ADoC network, the AP and its associated STAs access the coaxial cable with TDMA (Time Division Multiple Access) method to transmit frames over the coaxial cable media. The SATs transmit for uplink traffic, one after another, each using their own time slot in a TDF supper frame assigned by the AP. And for the download traffic, the STAs share the channels and select the data or management frames by comparing the destination address information in the frames with their addresses.

It is not necessary for the ADoC system to adopt the one -to-one ACK protocol because the coaxial cable is a wired medium with good anti-interference characteristic and the package loss rate is rather low in comparison with wireless communication. In order to improve the throughput of the ADoC system and reduce frame loss rate further, the inventors initially considered using the Block ACK protocol. However, the Block ACK protocol requires a large memory capacity to buffer frames both at the AP and the STAs, as described in the description to the background technology.

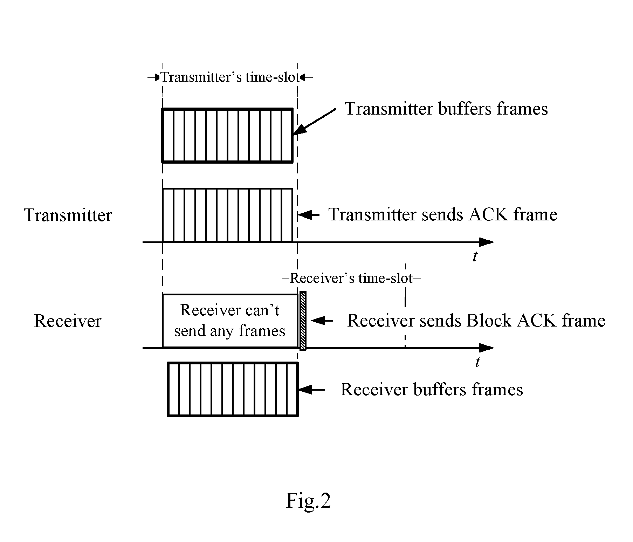

Figure 2 is an exemplary diagram showing the Block ACK protocol used in the ADoC system.

As shown in Figure 2, in the ADoC system, a transmitter (an AP or a STA) and a receiver (an AP or a STA) implement a data transmission there between with a TDF protocol. During the time-slot of the transmitter, the receiver can 't send any frames including ACK frame s in order to avoid collision, so the transmitter will have to buffer all frames transmitted in its time-slot period for possible retransmission. At the same time, the receiver will also need to buffer all frames received.

According to some tests, we estimated that about 70M bytes may be needed to buffer frames during the transmission. It is difficult and costly to provide such a large memory capacity for ADoC network devices, especially for the STAs.

### 2. Basic approach

In view of the above problem, according to one embodiment of the present invention, a method of communication with a group ACK protocol is proposed for the ADoC system.

According to the method, firstly, a plurality of frames to be transmitted to a receiver are grouped into a group frame with a predetermined size, in which the frames constitute an ordered sequence.

According to the present embodiment, all frames in one group frame have the same destination MAC address (transmitted to the same receiver). That is, frames that will be transmitted to the same receiver can be grouped into one group frame.

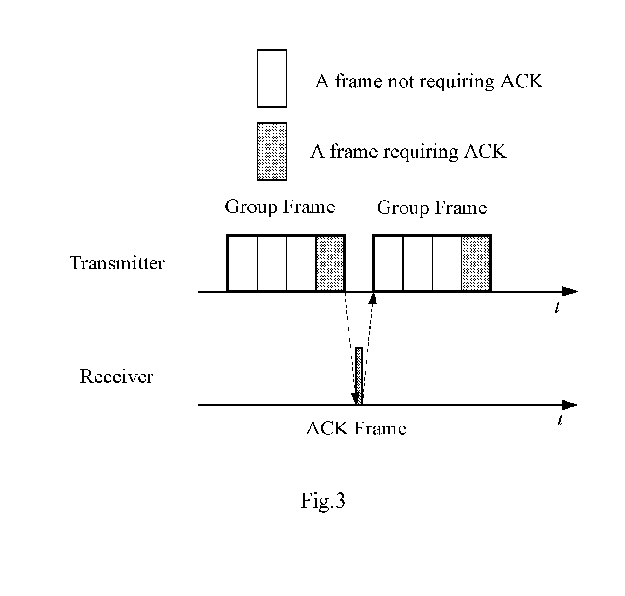

Figure 3 is an exemplary diagram showing a group ACK protocol according to an embodiment of the present invention. As shown in Figure 3, each group frame may comprise a plurality of frames not requiring individual ACK (NoNeedAckFrames) and one frame requiring ACK (NeedAckFrame). The frames in the group constitute an ordered sequence. In Figure 3, as an example, the last frame in a group is designated as the NeedAckFrame.

After that, the transmitter transmits this group frame in the sequence to a receiver and at the same time buffers all the frames of the group frame, for example in a memory, for possible retransmission.

The receiver will receive at least one frame from the transmitter in accordance with the sequence transmitting the group frame.

When a No NeedAckFrame is received, the receiver detects whether it is an expected one, i.e. a frame that is received in sequence. If the result is yes, the receiver will deliver this frame immediately to further processing. Otherwise, if a received frame is not the expected one (that is, received out of sequence), the receiver will determine that a frame loss happened during transmission (that is, one or more preceding frames in the group frame were not received) and so discard the frame.

In one embodimen t, when the NeedAckFrame is received, the receiver will reply with an ACK frame to require retransmission of all frames in the group starting with the first frame according to sequence not received by the receiver.

Upon reception of the ACK frame, the transmitter will retransmit all frames of the group starting with the first frame in accordance with the sequence not received by the receiver and also release the correctly received frames buffered in the memory. After that, the transmitter continues by transmitting the next group frame.

It can be seen from the above that according to the method of the present embodiment the receiver does not need to store any received frames for possible retransmission because it will immediately process or discard the received frames.

### 3. Detailed workflow

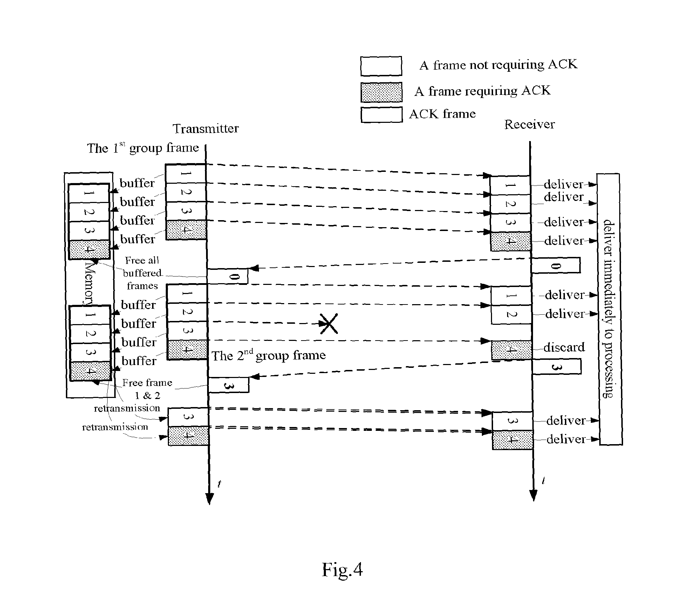

Figure 4 is an exemplary diagram showing the workflow of an example of the method of communication according to an embodiment of the present invention. The present embodiment will be described in more detail with reference to the Figure 4.

The transmitter groups a predetermined number of frames having the same destination into a group frame and orderly assigns a sequence number for each frame in one group. For example, the frames in a group can be assigned sequence numbers from 1 to a maximum sequence number of this group (MaxSeqNum). This sequence will be put to use to identify a frame loss at the receiver.

Figure 4 shows, for the purpose of this embodiment, each group frame comprises four individual frames which are in an ordered sequence, for example, by numbering from 1 to 4, with the 1^{st} to 3^{rd} frames as those not requiring an ACK (NoNeedAckFrames) and the last frame (4^{th} one) as a frame that requiring an ACK (NeedAckFrame) in this group.

Then, the transmitter transmits frames in the first group frame one by one in the sequence to the transmitter and buffers each frames in a memory of the transmitter.

The receiver receives the frames in accordance with the same sequence as that of transmitting the frames, that is, from the sequence number 1 to 4. As shown in Figure 4, all the four frames in the first group frame are correctly received in sequence by the transmitter. Therefore, upon reception of the 4^{th} frame (the NeedAckFrame in this group), the receiver sends an ACK frame to inform the transmitter that no frames in the first group frame ("0") need to be retransmitted. Each frame correctly received by the receiver will be immediately delivered to further processing without buffering them in a memory of the receiver.

In response to the reception of the ACK frame from the receiver, the transmitter releases all the four buffered frames of the first group frame from the memory thereof and starts to transmit the second group frame.

The transmission of the second group frame in the Figure 4 shows a case in which a frame loss happens, which will be described in greater detail.

As shown in Figure 4, the transmitter transmits the second group frame in the sequence to the receiver. The receiver will receive frames from the receiver in accordance with the same sequence of transmitting, that is, from reference number 1 to 4. For the 1^{st} frame to be received, the receiver will set the expected sequence number as "1". When the 1^{st} frame arrives, the receiver detects no difference between the sequence number of the received frame and expected sequence number, so it concludes that the 1^{st} frame in the second group frame is correctly received in the sequence and then delivers the 1^{st} frame immediately to further processing without buffering it. At the same time, the receiver will set the expected sequence number of the next frame as "2".

Then the 2^{nd} frame in the second group frame is correctly received in sequence by the receiver, as shown in Figure 4. So the receiver processes it in the same way as that for the 1^{st} frame . The receiver will also set the expected sequence number of the next frame as "3".

However, referring to Figure 4, the 3^{rd} frame in the second group frame is lost during the transmission and not received by the receiver. When the 4^{th} frame (the NeedAckFrame in the second group) arrives at the receiver, the receiver detects that the sequence number of this received frame isn't in accordance with the expected one, that is, the 4^{th} frame is not the one expected to receive according to the ordered sequence. Therefore, the receiver discards the 4^{th} frame and transmits an ACK frame in response to the reception of 4^{th} frame to inform the transmitter the first frame not received is the 3^{rd} frame.

After receiving the ACK frame, the transmitter retransmits the 3^{rd} and 4^{th} frames to the receiver and at the same time frees the buffered 1^{st} and 2^{nd} frames from the memory.

As shown in th e present embodiment, for the second group frame, the ACK frame informs the receiver the frames to be retransmitted by indicating the first frame not received (the 3^{rd} frame). Other method for this objective can also be used. For example, it is also applicable to inform the receiver by indicating the number "n" of frames to be retransmitted. In such case, the transmitter will retransmit last n frames in the group frame according to the sequence in response to the reception of the ACK frame.

Thus, from a point of view of receiving frames, the receiver does not need to be provided with a large memory.

Although not shown in Figure 4, in the present embodiment, the transmitter can be set to send the NeedAckFrame in a group to the receiver in case of not receiving an ACK frame from the receiver upon expiration of a predetermined time interval, for example, from the time point of transmitting the 1^{st} frame in this group of frames. Thereby the transmitter can request an ACK frame from the receiver when a condition that the NeedAckFrame in a group frame (in this case, the 4^{th} one) has not been received by the time a time-out occurs.

Similarly, the receiver can be set to send an ACK frame to the transmitter in case of not receiving a NeedAckFrame in this group from the transmitter upon expiration of a predetermined time interval, for example, from the time point of receiving the latest frame in this group.

As described above, the embodiment of the present invention can improve the throughput of a communication system because it reduces pause time for the ACK frame. At the same time, the receiver doesn't need to buffer received frames but can deliver them immediately to further processing if received in sequence, which will reduce the consumption of memory and shorten the delay.

However, the transmitter must buffer all frames in a group frame for possible retransmission. Because the size of a group frame determines the consumption of memory, the size of group frame can be adjusted according to the capacity of the available memory in the system. When the capacity of available memory becomes smaller, the size of group frame can be decreased correspondingly, and vice versa.

In an ADoC system, if the transmitter transmission rate is slow so that the interval between two adjacent frames is larger than one superframe period or one TCP traffic retransmission timeout, the size of the group frame should be adjusted to 1 to guarantee that the transmitter retransmits in time to avoid too large a retransmission delay.

### 4. Implementation example in an ADoC network

Next, as an embodiment of the present invention, an ADoC network system implementing the method of the present invention will be described in detail. In the following description, a transmission in ADoC network is taken as an example, in which a transmitter transmits frames to receivers in a TDF mode.

### 4.1 ADoC transmitter

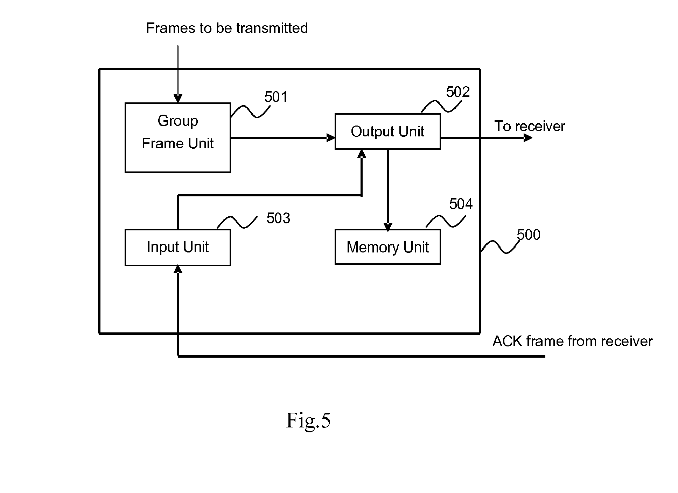

Figure 5 is an exemplary diagram showing the structure of an ADoC transmitter according to the present embodiment. As shown in Figure 5, the transmitter 500 comprises a group frame unit 501 , an output unit 502, an input unit 503 and a memory unit 504. Next, function and operation of these units will be described in more detail.

### 4.1.1 Transmitter identifying frame type and generating group frame

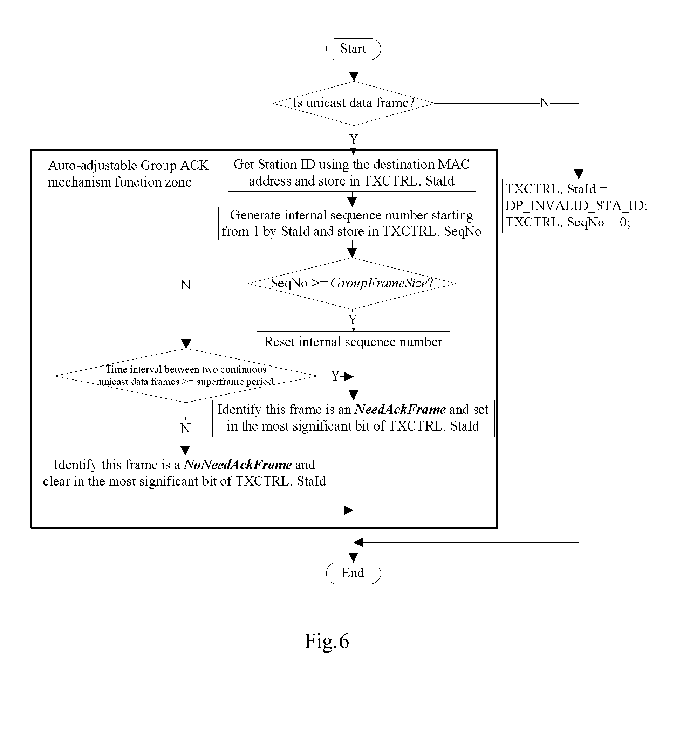

Figure 6 is a flowchart showing the procedure of the ADoC transmitter 500 identifying the frame type and generating a group frame to be transmitted.

As shown in Figure 6, the group frame unit 501 of the transmitter 500 will determine firstly whether or not the frame to be transmitted is a unicast one. The transmitter 500 will transmit frames with the group ACK protocol only when the result of this step is "Yes". If the result if "No", the group frame unit 501 will regard the frame as an invalid one for generating the group frame and directly send it to the output unit 502 to process it with an ordinary manner.

In the present embodiment, the ACK protocol is only applicable to the unicast frames because the ADoC network transmits frames in conformity with 802.11 protocol which prescribes that ACK mechanism only refers to unicast frame and not to frames of other types, for example multicast and broadcast ones. However, the present invention is not limit ed to unicast frames. In network systems that permit other types of frames to use ACK mechanism, the present invention can also be applied to multicast or broadcast transmission of a block to several receivers, followed by unicast retransmission to individual receivers.

Then, according to the present embodiment, the group frame unit 501 obtains a station ID (Stald) using the destination MAC address and stores it in a register TXCTRL.Stald.

Next, the group frame unit 501 ge nerates an internal sequence number (SeqNo) starting from 1 by Stald and stores it in a register TXCTRL.SeqNo;

Next, the group frame unit 501 determines whether the SeqNo is larger than or equal to the predetermined group frame size (GroupFrameSize).

If the result of the above step is "Yes", the group frame unit 501 will reset the internal sequence number, an d then identify this frame as a NeedAckFrame and set in the most significant bit of TXCTRL.Stald.

If the result is "No", the group frame unit 501 will further determine whether time interval between two continuous frames is greater or equal to a superframe period? If the two continuous frames are greater or equal to a superframe period, the group frame unit 501 will also identify this frame as a NeedAckFrame and set in the most significant bit of TXCTRL.Stald as described. Otherwise, the group frame unit will identify this frame as a NoNeedAckFrame and clear the most significant bit of TXCTRL.Stald.

Accordingly, unicast frames having a same address will be grouped into a group frame with a predetermined group size. Each group frame comprises a plurality of NoNeedAckFrames and one NeedAckFrame.

In following procedure, NoNeedAckFrames are considered as multicast frames and don't wait for ACK and retransmission. A NeedAckFrame is still considered as a normal unicast frame to wait for ACK.

### 4.1.2 Structure of the frame carrying the group ACK information

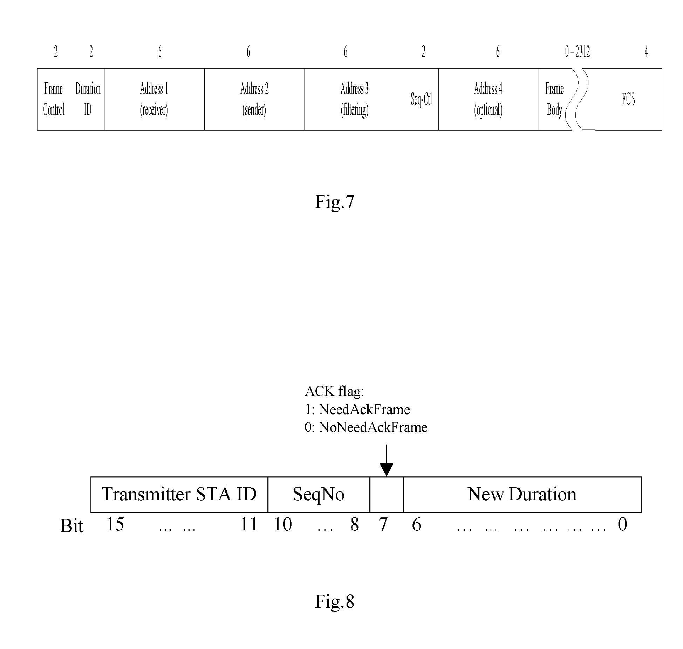

In the present embodiment, a data frame of 802.11 is redefined to carrying the group ACK information. One example of the generic structure of data frame in 802.11 is shown in Figure 7.

Figure 8 is a diagram showing the redefined structure of a part of the data frame carrying group ACK information.

As shown in Figure 8, according to the present embodiment, the Duration Field of a data frame according to the 802.11 is redefined as shown to carry group ACK information. As seen from the Figure 8, bit 15 to 11 is the transmitter's STA ID (station identifier). Bit 10 to 8 store the internal sequence number (SeqNo), for example, from 1 to 4. Bit 7 is the ACK flag, for example, in this case 0 denotes a NoNeedAckFrame and 1 denotes a NeedAckFrame that requires an ACK frame from the receiver. As shown in Figure 8, bit 6 to 0 is the New Duration subfield.

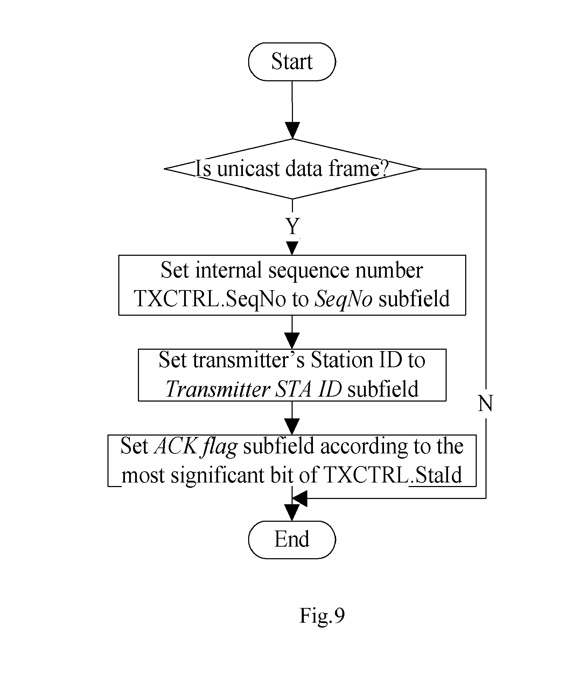

The setting procedure for these subfields is shown in the flowchart of Figure 9.

The group frame unit 501 , in the first step, determines whether the frame is a unicast one.

If "Yes", then the group frame unit sets the internal sequence number TXCTRL.SeqNo to SeqNo subfield;

Next, the group frame unit 501 sets the station ID to the Transmitter STA ID subfield.

Finally, the group frame unit sets the ACK flag subfield according to the most significant bit of TXCTRL.Stald.

Although a specific frame structure with the redefined Duration Field carrying the ACK information is shown and described, it is obvious for those skilled in the art that many other structures are also possible for implementing the solution under the principle of the present invention. In addition, only part of the frame is shown in the description. The data frame can also comprise other fields to implement the transmission. The other parts of the data frame are not described because they are not crucial in the context of the present embodiment.

4.1.3 Transmitter buffering of transmitted frames and retransmitting lost frames

After the group frame is generated, the output unit 502 coupled to the group frame unit 501 will transmit the frames of the group in sequence to the receiver.

The transmitted frames will be pushed into a buffer queue in the memory unit 504 according to the TXCTRL.Stald of the frame.

If the frame is a NeedAckFrame, the input unit 503 of the transmitter waits to get an sequence number of the frame that is expected to be received by the receiver('ExpectSeqNo') in an ACK frame for the NeedAckFrame from the receiver to be informed which frames should be put into retransmission queue from the memory unit 504 for retransmission and also which frames can be deleted since correctly received in sequence by the receiver.

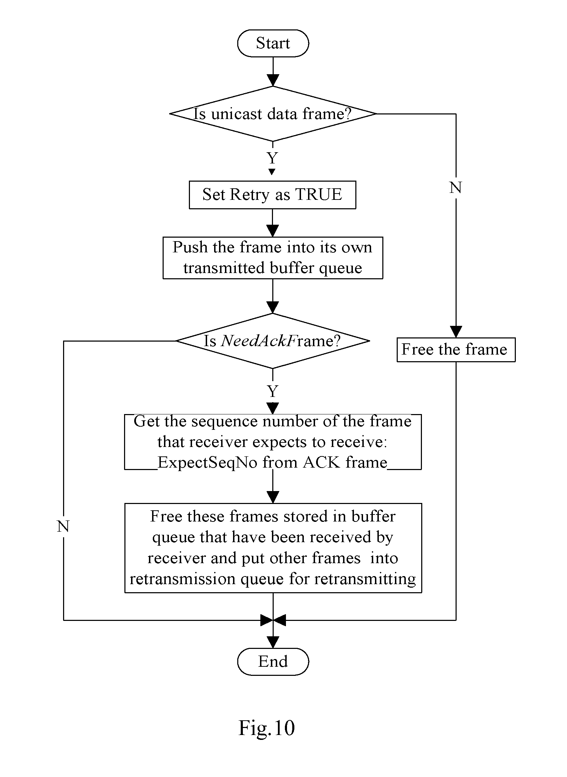

Figure 10 shows the procedure of the transmitter buffering transmitted frames and retransmitting lost frames in response to an ACK frame from a receiver.

As shown in Figure10, firstly, the output unit 502 of the transmitter 500 determines whether the transmitted frame is a unicast one. If "No", the output unit 502 will not store the frame in the memory unit 504. If "Yes", the output unit 502 will set a Boolean called 'Retry' as True and push the frame into the transmitted buffer queue in the memory unit 504.

Then the output unit 502 determines whether the buffered frame is a NeedAckFrame. If "Yes", the input unit 503 will wait for an ACK frame from the receiver to get from the ACK frame the sequence number of the first frame in the group frame that the station expects to be retransmitted (i.e. not received by the receiver).

Next, upon reception of the ACK frame from the receiver, the output unit 502 will get all frames of the group starting with the first frame not received indicated in the ACK frame from the buffer queue in the memory unit 504 and put these frames into a retransmission queue for retransmitting and free from the buffer queue those frames which have been so far correctly received in sequence by the receiver.

Although not shown in Figure 5, the transmitter 500 also can comprises a time-out controller for controlling the output unit 502 to transmit the NeedAckFrame in a group to the receiver in response to an expiration of a predetermined time interval. Therefore, in the condition that the NeedAckFrame is lost during transmission, the transmitter can also require an ACK frame from the receiver to trigger a retransmission.

### 4.2 ADoC receiver

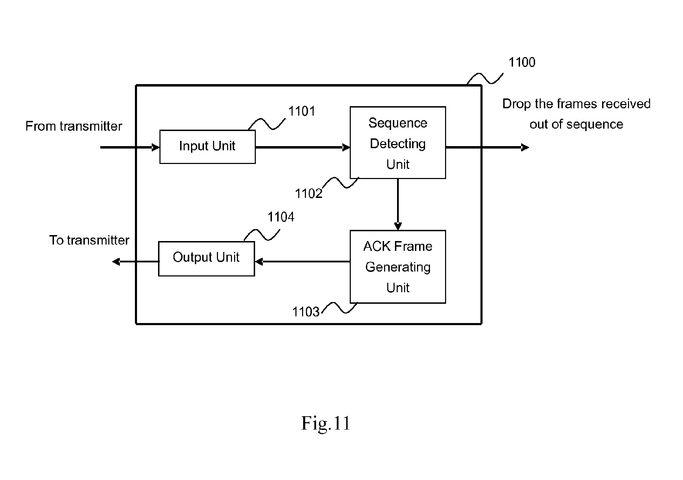

As shown in the block diagram of Figure 11, the receiver 1100 comprises an input unit 1101, a sequence detecting unit 1102, an ACK frame generating unit 1103 and an output unit 1104. Next, function and operation of these units will be described in more detail.

4.2.1 Receiver processing group ACK information in the received frames

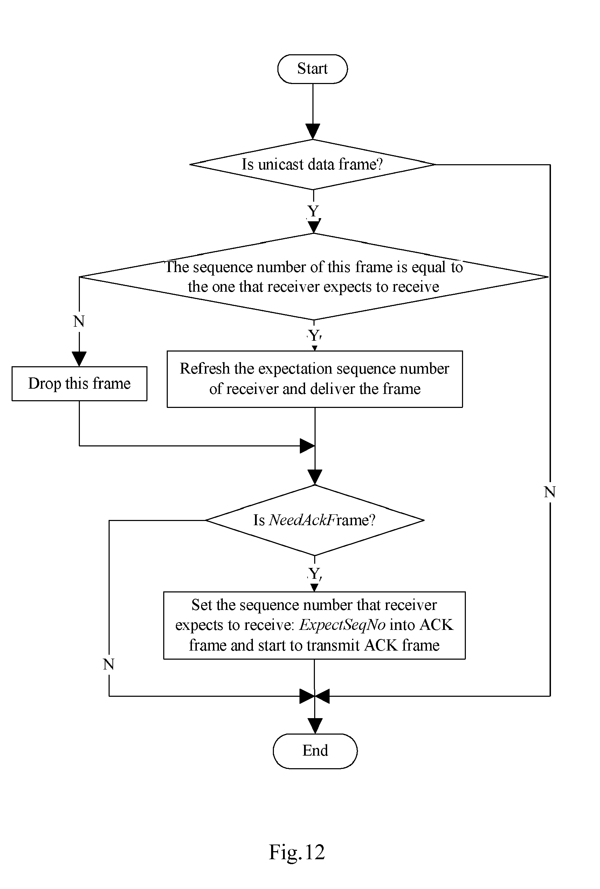

As shown in Figure 11, the receiver 1100 comprises an input unit 1101 for receiving frames from the transmitter. When the input unit 1101 receives a frame, it will check the frame type and process the information in the frame, as shown in Figure 12.

Figure 12 shows the procedure of the receiver 1100 processing group ACK information in received data frames.

The input unit 1101 will firstly determine whether the received frame is a unicast one. If the result is "No", the receiver 1100 will process the frame in a usual manner.

If the received frame is a unicast one, the sequence detecting unit 1102 coupled to the input unit 1101 of the receiver 1100 will determine whether the sequence number of this frame is equal to the one that the receiver expects to receive in accordance with the sequence.

If the result is "Yes", the sequence detecting unit 1102 will refresh the expectation sequence number of the receiver and deliver the frame to further processing.

If the result is "No", the sequence detecting unit 1102 will drop the frame immediately.

For all the received frames, the acknowledgement frame generating unit 1103 will judge whether it is a NeedAckFrame. If the received frame is a NeedAckFrame, the acknowledgement frame generating unit 1103 will generate an ACK frame, getting the sequence number of the frame that it expects to receive ('ExpectSeqNo') from the sequence detecting unit 1102 and inserting it into the ACK frame. The output unit 1104 of the receiver 1100 then sends the ACK frame to the transmitter.

As previously described, the transmitter will retransmit all the frames starting with the ExpectSeqNo to the last in the group upon reception of the ACK frame.

The receiver 1100 also can comprises a time-out controller (not shown) for controlling the output unit 1104 to transmit the acknowledge frame to the transmitter in response to an expiration of a predetermined time interval. Therefore, in the condition that the NeedAckFrame is lost during transmission, the receiver 1100 can also transmit an acknowledgement frame to trigger the retransmission.

### 4.2.2 Structure of an ACK frame carrying group ACK information

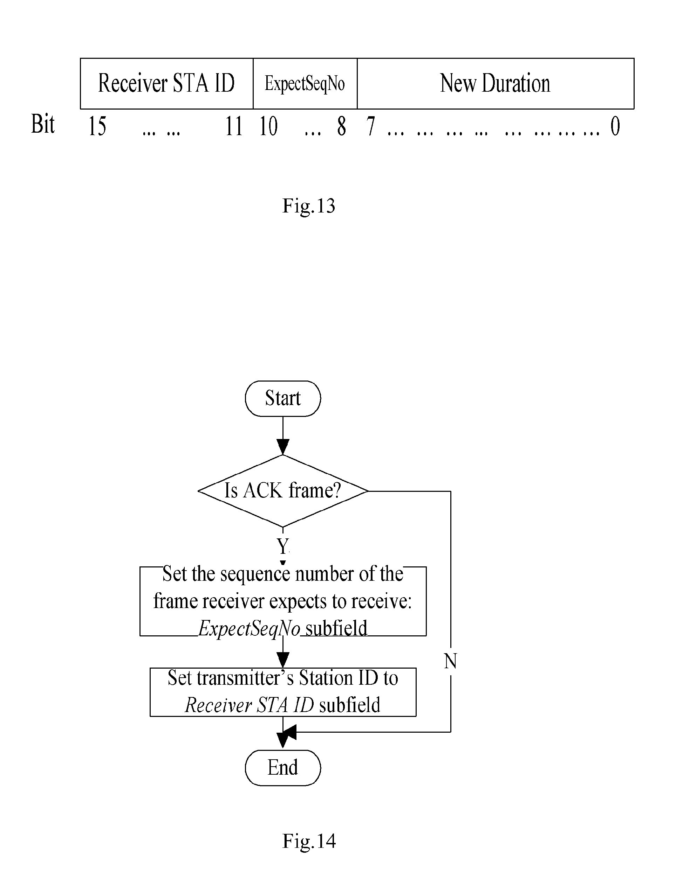

Figure 13 is a diagram showing the structure of an ACK frame carrying group ACK information. The ACK frame is also redefined based on a generic data frame defined in 802.11, as described in Figure 7.

In this example, the Duration field is redefined as ACK frame to carry group ACK information. As shown in Figure 13, bit 15 to 11 is the receiver STA ID, bit 10 to 8 store the sequence number of the frame that the receiver expects to receive ('ExpectSeqNo') and the remaining bits (7 to 0) are used for new Duration Field.

Figure 14 is a flowchart showing the steps carried out by the receiver 1100 for setting the subfields of a data frame for use as ACK frame.

As shown in Figure 14, the ACK frame generating unit 1103 of the receiver 1100 will determine whether it is a frame requiring acknowledgment.

If "Yes", the sequence number that the receiver expects to receive will be set to the ExpectSeqNo subfield as shown in Figure 14.

The transmitting station ID also will be set to the receiver's STA ID subfield.

Other acknowledgment frame structures may be used.

While the embodiments are presented in the context of the ADoC network system with TDF, those skilled in the art will recognize that the principles of the invention are applicable to other communication systems which share transmission medium. It is to be understood that numerous modifications may be made to the illustrative embodiments and that other arrangements may be devised without departing from the spirit and scope of the present invention as defined by the appended claims.

## Claims

1. A method of communication between a transmitter and a receiver, **characterized by** the steps of, at the level of the transmitter:
transmitting a group of frames constituting an ordered sequence to the receiver; and
upon reception of an acknowledgement frame transmitted from the receiver, said acknowledgment frame requesting retransmission of all frames of the group starting with the first frame in accordance with the sequence that was not received, retransmitting all frames of the group starting with said first frame to the receiver.

2. The method according to claim 1, wherein a last frame in the group of frames comprises information for requesting an acknowledgement from the receiver.

3. The method according to one of the claim 1 or 2, wherein the transmitter buffers all the transmitted frames in the group of frames.

4. The method according to claim 3, wherein the transmitter sets the size of the group of frames according to the buffer capacity thereof.

5. The method according to claim 2, wherein the transmitter transmits the last frame to the receiver in case of not receiving an acknowledgement frame from the receiver upon expiration of a predetermined time interval.

6. A method of communication between a transmitter and a receiver, **characterized by** the steps of, at the level of the receiver:
receiving at least one frame of a group of frames constituting an ordered sequence transmitted from the transmitter; and
upon detection that a frame is received out of the sequence, transmitting an acknowledgement frame to the transmitter requesting retransmission of all frames of the group starting with the first frame in accordance with the sequence that was not received.

7. The method according to claim 6, wherein the receiver transmits the acknowledgment frame in response to a reception of the last frame in the group of frames.

8. The method accord ing to one of the claims 6 or 7, wherein the acknowledgment frame comprises an identification of the first frame not received according to the sequence.

9. The method according to one of the claim 6 to 8, wherein the receiver sends an acknowledgement frame in case of not receiving a frame which requests an acknowledgement from the transmitter upon expiration of a predetermined time interval.

10. The method according to one of the claims 6 to 9, wherein the receiver delivers the frames received in the sequence to further processing and discards the frames received out of the sequence.

11. A transmitter (500) in a communication system, **characterized in that** it comprises:
a group frame unit (501), for generating a group frame that is comprised of a plurality of frames to be transmitted to a receiver and setting up an ordered sequence for the frames in the group;
an output unit (502) coupled to the group frame unit (501), for transmitting the frames in the group in accordance with the sequence to the receiver; and
an input unit (503), for receiving a frame from the receiver, wherein
upon reception by the input unit (503) of an acknowledgement frame transmitted from the receiver requesting retransmission of all frames of the group starting with the first frame that is not received in accordance with the sequence at the receiver, the output unit (502) retransmits these frames indicated in the acknowledgement frame to the receiver.

12. The transmitter (500) according to claim 11, wherein the transmitter further comprises a memory unit (504) coupled to the group frame unit (501), for buffering all the frames in the group.

13. The transmitter according to claim 11, wherein the memory unit (504) frees the buffered frames which have been received in sequence by the receiver in response to the reception of the acknowledgment frame.

14. A receiver (1100) in a communication system, **characterized in that** it comprises:
an input unit (1101), for receiving at least one frame in a group of frames constituting an ordered sequence from a transmitter;
a sequence detecting unit (1102) coupled to the receiving unit (1101), for detecting whether a frame in the group is received out of sequence;
an acknowledgment frame generating unit (1103) for generating an acknowledgement frame requesting retransmission of all frames in the group starting with the first frame not received in sequence; and
an output unit (1104) for transmitting the acknowledgement frame to the transmitter.

15. The receiver according to claim 14, wherein the input unit (1101) delivers the frames which are indicated by the sequence detecting unit (1102) to be the ones received in accordance with the order in the sequence to further processing and discards the frames which are indicated by the sequence detecting unit (1102) to be the ones received out of sequence.
